# EUROPEAN PATENT SPECIFICATION

(11) **EP 4 542 490 B1**
(45) Date of publication and mention of the grant of the patent: **16.09.2026**
(21) Application number: 23825751.3
(22) Date of filing: 16.01.2023
(51) Int. Cl.: G06T 7/33

(54) **IMAGE REGISTRATION AND TEMPLATE CONSTRUCTION METHOD AND ELECTRONIC DEVICE, AND STORAGE MEDIUM**
VERFAHREN UND ELEKTRONISCHE VORRICHTUNG ZUR BILDREGISTRIERUNG UND VORLAGENKONSTRUKTION, UND SPEICHERMEDIUM
PROCÉDÉ ET DISPOSITIF ÉLECTRONIQUE D'ENREGISTREMENT D'IMAGE ET DE CONSTRUCTION DE MODÈLE, ET SUPPORT DE STOCKAGE

(30) Priority: 20.06.2022 CN 202210696627
(43) Date of publication of application: 23.04.2025
(73) Proprietor: Shenzhen Salus Biomed Co., Ltd, Shenzhen, Guangdong 518107 (CN)
(72) Inventor: CHEN, Wei, Shenzhen, Guangdong 518107 (CN); WANG, Gufeng, Shenzhen, Guangdong 518107 (CN); ZHAO, Luyang, Shenzhen, Guangdong 518107 (CN)
(74) Representative: Cabinet Chaillot
(86) International application number: PCT/CN2023/072455
(87) International publication number: WO 2023/246091

(56) References cited:
- WO-A1-2020/037571
- CN-A- 105 550 990
- CN-A- 112 204 615
- CN-A- 112 289 381
- CN-A- 112 823 352
- CN-A- 114 549 600
- CN-A- 115 187 643
- US-A1- 2012 020 537
- US-A1- 2021 350 533

## Description

### CROSS-REFERENCE

The invention claims the priority of China Patent Application No. 202210696627.X, entitled "IMAGE REGISTRATION AND TEMPLATE CONSTRUCTION METHOD AND APPARATUS, AND ELECTRONIC DEVICE AND STORAGE MEDIUM THEREFOR", and filed on June 20, 2022 to China Patent Office.

### FIELD

The invention relates to the field of image processing, and more particularly, relates to an image registration and template construction method and apparatus and electronic device and storage medium therefor.

### BACKGROUND

Regarding the prior image registration and template construction method, when it is used to conduct chromatic aberration correction for fluorescence images in difference channels and image registration for fluorescence images in different cycles, it has the problem of low accuracy. How to enhance the accuracy of the image registration and template construction becomes a technological problem requiring to be eagerly solved.

US 2012/020537 A1 discloses methods and systems for analysis of image data generated from various reference points. The methods and systems provided are useful for real time analysis of image and sequence data generated during DNA sequencing methodologies.

US 2021/350533 A1 discloses methods and systems of image analysis useful for identifying and/or quantifying features in patterns.

### SUMMARY

An object of the embodiments of the present invention is to provide an image registration and template construction method and apparatus and electronic device and storage medium therefor, thereby to increase the accuracy of image registration and template construction.

To achieve the above object, the embodiments of the present invention, in a first aspect, provide a computer-implemented image registration and template construction method, comprising:
Obtaining original fluorescence images to be registered in a plurality of cycles, the original fluorescence images of each cycle comprising original fluorescence images in four fluorescence channels corresponding to four kinds of bases;
Performing a processing of a first image registration to the original fluorescence images of different cycles in a same fluorescence channel to obtain first fluorescence images;
Performing a processing of a second image registration to the first fluorescence images of the same fluorescence channel to obtain second fluorescence images;
Performing a processing of a chromatic aberration correction to the second fluorescence images of the four fluorescence channels in a same cycle to obtain target fluorescence images;
Performing a coordinate extraction to fluorescence points of the target fluorescence images to obtain data of fluorescence point coordinates;
Performing a processing of aggregation to the fluorescence points according to the data of fluorescence point coordinates to obtain a sequencing template; and
Performing a processing of brightness extraction to a DNA sequence to be acquired according to the sequencing template to obtain corresponding target brightness values of the target bright points;
According to the claimed invention, the step of performing a processing of a chromatic aberration correction to the second fluorescence images of the four fluorescence channels in a same cycle to obtain target fluorescence images, comprises:
   performing a pairing processing to the fluorescence points in a target region of the second fluorescence images of the four fluorescence channels in the same cycle according to a predetermined second radius parameter to obtain second fluorescence point pairs;
   performing a correction processing to the second fluorescence point pairs to obtain target fluorescence point pairs;
   performing a global projection calculation to the target fluorescence point pairs using a least squares method to obtain a global projection transformation matrix; and
   performing a perspective transformation correction to the second fluorescence images according to the global projection transformation matrix to obtain the target fluorescence images.

In some embodiments, the step of performing a processing of a first image registration to the original fluorescence images of different cycles in a same fluorescence channel to obtain first fluorescence images, includes:
Performing a binary image reconstruction to the original fluorescence images of different cycles in the same fluorescence channel to obtain binary centroid reconstructed images, and performing a Fourier transform to the binary centroid reconstructed images to obtain image translation parameters ;
Performing a translation transform to the original fluorescence images of different cycles in the same fluorescence channel according to the image translation parameter to obtain the first fluorescence image.
In some embodiments, the step of performing a processing of a second image registration to the first fluorescence images of the same fluorescence channel to obtain second fluorescence images, includes:
Performing a pairing processing to the fluorescence points of the first fluorescence images according to a predetermined first radius parameter to obtain first fluorescence point pairs;
Performing an affine calculation to thefirst fluorescence point pairs using a least squares method to obtain an affine matrix;
Performing an affine transformation to the first fluorescence images of the same fluorescence channel using the affine matrix to obtain the second fluorescence images.

In some embodiments, the step of performing a processing of aggregation to the fluorescence points according to the data of fluorescence point coordinates to obtain a sequencing template, includes:
Calculating a distance value between every two of the fluorescence points according the data of fluorescence point coordinates;
Performing a processing of aggregation to the fluorescence points according to the distance value and a predetermined distance threshold to obtain common bright points, and constructing the sequencing template according to the common bright points.

In some embodiments, the step of performing a processing of aggregation to the fluorescence points according to the distance value and a predetermined distance threshold to obtain common bright points, and constructing the sequencing template according to the common bright points, includes:
Comparing the distance value and a predetermined distance threshold to obtain a comparison result;
Performing a processing of aggregation to the fluorescence points according to a predetermined clustering algorithm and the comparison result to obtain the common bright points;
Constructing a single DNA strand according to the common bright points and constructing the sequencing template according to the single DNA strands.

In some embodiments, performing a processing of brightness extraction to a DNA sequence to be obtained according to the sequencing template to obtain target brightness values of corresponding target bright points, includes:
Performing a brightness extraction to the DNA sequence to be acquired according to the sequencing template, to obtain the target bright points;
Extracting the brightness value of a centroid of each target bright point through a bilinear interpolation to obtain the target brightness value.

In order to achieve the above objects, a second aspect of the embodiments of the present invention provides an electronic device; the electronic device includes a storage unit, a processing unit, a program which is stored in the storage unit and can be executed by the processing unit, and a cable assembly which can carry out information communication between the processing unit and the storage unit. The method according to the first aspect of the present invention is carried out when the program is executed by the processing unit.

In order to achieve the above objects, a third aspect of the embodiments of the present invention provides a storage medium. The storage medium is a readable storage medium of a computer for readable storage of the computer. The storage medium has a program or a number of programs. The program or the programs can be executed by a processor or a number of processors to thereby carry out the method according to the above-mentioned first aspect of the present invention.

The image registration and template construction method and apparatus and electronic device and storage medium therefor proposed by the present invention obtain the original fluorescence images to be registered, perform the first image registration to the original fluorescence images to obtain the first fluorescence images, perform the second image registration to the first fluorescence images to obtain the second fluorescence images. The present invention processes two image registrations whereby the present invention can perform image registrations having different pixel levels to the original fluorescence images, from light to darkness, thereby to increase the accuracy of image registration in the same fluorescence channel during different cycles. Furthermore, the processing of chromatic aberration correction to the second fluorescence images to obtain the target fluorescence images is able to more correctly estimate the chromatic aberrations in different channels thereby to increase the accuracy of chromatic aberration correction. Finally, the present invention proposes the extraction of coordinate of fluorescence points of the target fluorescence images to obtain the data of fluorescence coordinate,s the aggregation processing to the fluorescence points according to the fluorescence coordinates to obtain the sequencing template, and the brightness extraction processing to the DNA sequence to be obtained through the sequencing template to obtain the corresponding target brightness values of the target bright points. Thus, the present invention can perform template construction based on fluorescence points and data of fluorescent coordinates in a plurality of cycles, to promote the comprehensiveness and accuracy of the sequencing template. At the same time, through the brightness extraction of the DNA sequence to be obtained by the sequencing template, the efficiency and accuracy of extraction of luminous intensity can be effectively improved. The embodiments of the present invention optimize the art through the image registration stage, the chromatic aberration correction stage, the template construction stage and the luminous intensity extraction stage, thereby to fully optimize the procedure of DNA sequencing.

### BRIEF DESCRIPTION OF THE DRAWINGS

FIG. 1 is a flow chart of an image registration and template construction method provided by an embodiment of the present invention;
FIG. 2 is a flow chart of step S102 in FIG. 1;
FIG. 3 is a flow chart of step S103 in FIG. 1;
FIG. 4 is a flow chart of step S104 in FIG. 1;
FIG. 5 is a flow chart of step S105 in FIG. 1;
FIG. 6 is a flow chart of step S502 in FIG. 5;
FIG. 7 is a flow chart of step S107 in FIG. 1;
FIG. 8 is a structural diagrammatic view of an image registration and template construction apparatus provided by an embodiment of the present invention; and
FIG. 9 is a structural diagrammatic view of hardware of an electronic device provided by an embodiment of the present invention.

### DESCRIPTION OF THE EMBODIMENTS

For facilitating understanding of the purposes, technical features, and advantages of the present invention, a detailed description of embodiments of the present invention with reference to the accompanying drawings is provided. It is understood that the specific embodiments are disclosed only for explaining the present invention, rather than for limiting the present invention.

It should be clarified that although there are distinguished function modules in the diagrammatic view of the apparatus and logic sequence in the flow chart, in some situations, other distinguished modules different from those shown in the apparatus or other sequences different from the that shown in the flow chart can be used to execute the steps as disclosed. The terms "first", "second", etc. used in the specification, claims and accompanying drawings are used to distinguish similar objects, rather than to describe a specific sequence or time order.

Except otherwise defined, all of the technological and scientific terminologies used herein are similar to those which can be generally comprehended by a technical person skilled in the art pertained to the technical field of the present invention. The terminologies used herein are only for describing the embodiments of the present invention, rather than limiting the present invention.

First, some of the terms used in the present invention are explained as follows:

Artificial Intelligence (AI): A new technical science that studies and develops theories, methods, technologies and application systems for simulating, extending and expanding human intelligence. Artificial intelligence is a branch of computer science. It attempts to understand the essence of intelligence and produce a new intelligent machine that can respond in a similar way to human intelligence. The research in this field includes robotics, language recognition, image recognition, natural language processing, expert systems, etc. Artificial intelligence can simulate human consciousness and thinking process of information. Artificial intelligence also uses numerical computers or machines controlled by numerical computers to simulate, extend and expand human intelligence, sense environment, and acquire knowledge, and use the knowledge to obtain theories, methods, technologies and application systems which have the optimal result.

Image registration: A process of matching and superimposing two or more images acquired at different times, using different sensors (imaging devices) or under different conditions (weather, illumination, camera position and angle, etc.). Image registration is a process of optimally mapping an image or a plurality of images (partially) to a target image based on a certain criterion of estimation. Specifically, regarding two images of a dataset of a group of images, an image (i.e., moving image) is mapped to another image (i.e., fixed image) through a spacial transformation, to thereby match points of the two images having the same positions related to a space, thereby achieving the objective of image information fusion.

Fourier transform: It means that a function that satisfies certain conditions can be expressed as a linear combination of trigonometric functions (sine function and/or cosine function) or their integrals. In different research fields, Fourier transform has many different variants, such as continuous Fourier transform and discrete Fourier transform.

Bilinear interpolation: It also called bilinear interpolation. Mathematically, bilinear interpolation is an extension of linear interpolation with an interpolation function of two variables. Its core idea is respectively to perform linear interpolation in two directions. As an interpolation algorithm in numerical analysis, bilinear interpolation is widely used in signal processing, digital image processing and video processing, etc.

Affine transformation: It also called affine mapping. It means that, in geometry, a vector space is transformed into another vector space by a linear transformation followed by a translation. An affine transformation is defined geometrically as an affine transformation or an affine mapping between two vector spaces, which is consisting of a non-singular linear transformation followed by a translation. In the finite-dimensional condition, each affine transformation can be defined by a matrix A and a vector b, which can be written as matrix A with an additional column vector b.

In the image registration and template construction method of the related art, when calculating the aberration matrix in different channels, often only limited parameter of degree of freedom are calculated. Meanwhile, when calculating image shifting in the same fluorescence channel, often only pixel-level image registration can be attained. Thus, when chromatic aberration correction performed for fluorescence images in different channels and when image registration performed for fluorescence images in different cycles are both easy to cause low accuracy issues. During the template construction stage, the sequencing template constructed by the image registration and template construction method of the related art often is unable to search all of the common bright points. Therefore, the problem of interference between neighboring fluorescence points cannot be effectively solved, the accuracy and comprehensiveness of the template is poor, and accuracy of DNA sequence is affected. Thus, how to promote the accuracy of image registration and template construction becomes a technical problem which is eagerly to be solved.

Accordingly, the embodiments of the present invention provide an image registration and template construction method, apparatus, electronic device and storage medium therefor, which are aimed to increase the accuracy of image registration and template construction.

The image registration and template construction method, apparatus, electronic device and storage medium therefor provided by the embodiments of the present invention are specifically explained through the following descriptions of the embodiments. Firstly, the image registration and template construction method of the embodiments are disclosed.

The embodiments of the present invention can base on artificial intelligence to obtain and process the related data. The artificial intelligence (AI) is using numerical computers or machines controlled by numerical computers to simulate, extend and expand human intelligence, sense environment, and acquire knowledge, and use the knowledge to obtain theories, methods, technologies and application systems which have the optimal result.

The basic technology of the artificial intelligence generally includes sensors, dedicated AI chips, cloud computing, distributed data storages, big data processing technology, operation/interaction systems, mechatronics technology. AI software technology mainly includes the following major directions: computer visual technology, robot technology, biometrics technology, voice processing technology, natural language processing technology and machine learning/deep learning, etc.

The image registration and template construction method of the present invention involves the technical field of artificial intelligence. The embodiments of the image registration and template construction method of the present invention can be applied either in a terminal or a server; moreover, it can be software executable in a terminal or server. In some embodiments, the terminal can be a smart phone, a tablet computer, a notebook computer, a desktop computer, etc. The server can be arranged as an independent physical server, a server group or a distributed system consisting of a plurality of physical servers. Furthermore, the server can be arranged as a cloud server providing basic cloud computing services which include cloud service, cloud database, cloud computing, cloud function, cloud storage, network service, cloud communication, middleware service, domain name service, security service, CDN (content distribution network) and big data and artificial intelligence platform, etc. The software can realize application of the image registration and template construction method and it is not limited to the form mentioned above.

The present invention can be used in a variety of general-purposed or dedicated computer system environments or arrangements, for example, personal computer, server computer, handheld equipment, portable equipment, tablet equipment, multi-processor system, system based on micro-processor, set-top box, programmable consumer electronic equipment, network PC, minicomputer, mainframe computer, and disturbed computing environment consisting of any system or equipment mentioned above, etc. The present invention can be described in general context of computer executable instructions, for example, program module, to be executed by computer. Generally, the program module includes routine, program, object, component, data structure, etc for executing specific mission or carrying out specific abstract data type. The present invention can also be carried out in a distributed environment. In the distributed environment, the mission is executed by remote processing devices which are connected together through a communication network. In the distributed environment, the program module can be stored in a storage medium of a local computer and a remote computer including a storage equipment therein.

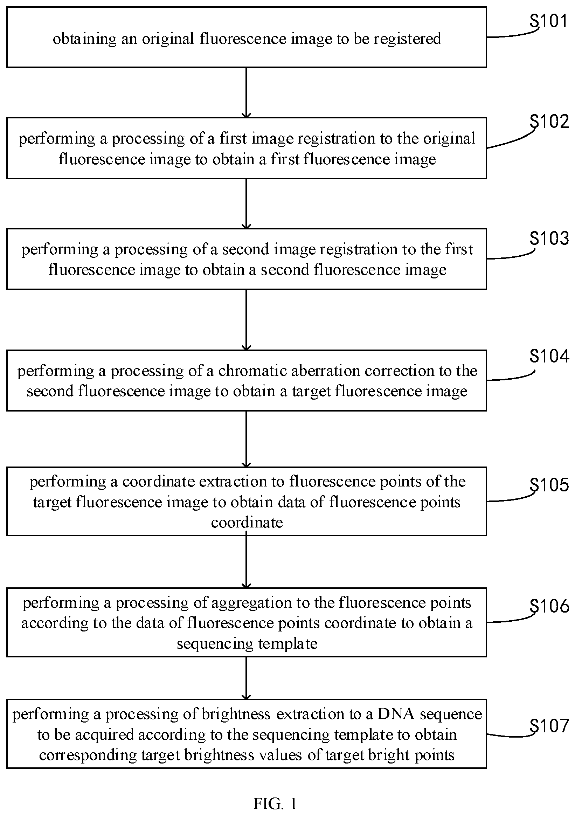

Fig. 1 is an exemplary flow chart of an image registration and template construction method in accordance with an embodiment of the present invention. The method of Fig. 1 can include, but is not limited to, step S101 to step S107.
Step S101, obtaining original fluorescence images to be registered in a plurality of cycles, the original fluorescence images of each cycle comprising original fluorescence images in four fluorescence channels corresponding to four kinds of bases;
Step S102, performing a processing of a first image registrations of different cycles in a same fluorescence channel to the original fluorescence image to obtain first fluorescence images;
Step S103, performing a processing of a second image registration to the first fluorescence images of the same fluorescence channel to obtain second fluorescence images;
Step S104, performing a processing of a chromatic aberration correction to the second fluorescence images of the four fluorescence channels in a same cycle to obtain target fluorescence images;
Step S105, performing a coordinate extraction to fluorescence points of the target fluorescence image to obtain data of fluorescence points coordinates;
Step S106, performing a processing of aggregation to the fluorescence points according to the data of fluorescence point coordinates to obtain a sequencing template;
Step S107, performing a processing of brightness extraction to a DNA sequence to be acquired according to the sequencing template to obtain corresponding target brightness values of target bright points.

The step S101 to step S107 disclosed by the embodiment of the present invention includes the steps of obtaining the original fluorescence images to be registered, performing the first image registration to the original fluorescence images to obtain the first fluorescence images, and performing the second image registration to the first fluorescence images to obtain the second fluorescence images. The embodiment of the present invention processes image registrations two times whereby the present invention can perform image registrations at different pixel levels to the original fluorescence images, from light to darkness, thereby to increase the accuracy of image registration in the same fluorescence channel during different cycles. Furthermore, the processing of chromatic aberration correction to the second fluorescence images to obtain the target fluorescence images is able to more accurately estimate the chromatic aberrations in different channels thereby to increase the accuracy of chromatic aberration correction. Finally, the embodiment of the present invention proposes the extraction of coordinate of fluorescence points of the target fluorescence images to obtain the data of fluorescence coordinates, the aggregation processing to the fluorescence points according to the fluorescence coordinates to obtain the sequencing template, thus, the brightness extraction to the DNA sequence to be acquired according to the sequencing template to obtain the corresponding target brightness values of the target bright points. Thus, the embodiment of the present invention can perform template construction based on fluorescence points and data of fluorescent coordinates in a plurality of cycles, to promote the comprehensiveness and accuracy of the sequencing template. At the same time, for the brightness extraction of the DNA sequence to be acquired according to the sequencing template, the efficiency and accuracy of extraction of luminous intensity can be effectively improved. The embodiments of the present invention optimize the image registration stage, chromatic aberration correction stage, template construction stage and luminous intensity extraction stage, thereby to fully optimize the procedure of DNA sequencing.

In the step S101 of some embodiments, since in each cycle of the DNA sequencing process a base is identified, an entire DNA sequence can be formed by incessantly adding bases through a plurality of cycles. In each cycle, the DNA sequencing includes obtaining fluorescence images by photography and identify a base by sequencing these fluorescence images, and identifying whether fluorescence marks exist in the fluorescence images in different fluorescence channels to ascertain base type. Therefore the entire DNA sequence can be formed by splicing the bases obtained from a plurality of cycles. In the above process, the original fluorescence images can be obtained through photographing of camera to take picture of a fluorescence image containing the base in each cycle.

It should be noted that according to the types of bases forming the DNA, the original fluorescence images includes image in four fluorescence channels, i.e., the fluorescence images corresponding to adenine, the fluorescence images corresponding to guanine, the fluorescence images corresponding to cytosine, and the fluorescence images corresponding to thymine.

Because there is a photographing offset in each cycle of the DNA sequencing process, it is required to conduct an image registration for the original fluorescence images in each cycle. Meanwhile, there is a variation between different camera lens, an aberration is certainly existed between the images taken from different fluorescence channels. Thus, it is required to conduct chromatic aberration correction for the original fluorescence images. The embodiment of the present invention can align the original fluorescence images taken from four fluorescence channels in the same cycle with each other through the image registration and chromatic aberration correction, so that the fluorescence brightness of the same position in the four fluorescence channels can be extracted for subsequent base identification, thus increasing the accuracy of DNA sequencing.

Moreover, the embodiment of the present invention includes both the image registrations in the same fluorescence channel (i.e., the first image registration and the second image registration for the original fluorescence images), and the image chromatic aberration correction in different fluorescence channels (i.e., the process of chromatic aberration correction for the second fluorescence images). Thus, the accuracy of image registration and chromatic aberration correction can be increased.

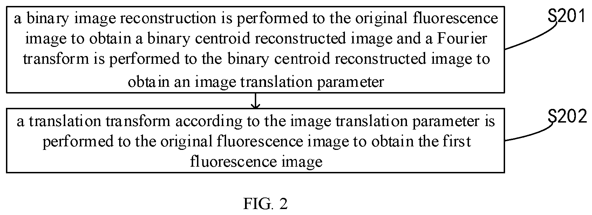

Please referring to Fig. 2, in some embodiments, the step S102 can include but is not limited to step S201 to step S202.

In the step S201, a binary image reconstruction is performed to the original fluorescence images of different cycles in the same fluorescence channel to obtain binary centroid reconstructed images and a Fourier transform is performed to the binary centroid reconstructed images to obtain an image translation parameters.

In the step S202, a translation transform according to the image translation parameter is performed to the original fluorescence images of different cycles in the same fluorescence channel to obtain the first fluorescence images.

In the step S201 of some embodiments, since the positions of the plurality of fluorescence images corresponding to the four kinds of bases unavoidably have position offsets therebetween, it thus requires Fourier transform to conduct the pixel-level image registration. Specifically, all the image registrations use the original fluorescence images obtained from the first cycle (cycle 1) as the reference images. The offset in the first cycle is assumed to be (0, 0). The centroid of the bright points of each original fluorescence image in each circle is conducted with a binary image reconstruction to obtain the binary centroid reconstructed image in each cycle. It should be noted the binary image reconstruction herein mainly concerns the calculation of the binarized size of the centroid of the bright point. The binary centroid reconstructed images obtained in the subsequent cycles (cycle 2 to cycle N) are performed with image registration with the binary centroid reconstructed images obtained in the first cycle (cycle 1) based on the Fourier transform, which transforms the space domain to frequency domain, to thereby obtain the offset (x₀, y₀). The offset (x₀, y₀) is used as the image translation parameters. The original fluorescence images obtained in the following cycles (cycle 2 to cycle N) are conducted with a translation transform using the image translation parameters to thereby obtain the first fluorescence images as mentioned in step S201 of each cycle. The image registration performed in this manner can have a pixel-level accuracy.

It should be noted that in accordance with the Fourier transform, any two images (for example, f₁ and f₂) should satisfy the following relation: ${f}_{2} \left(x, y\right) = {f}_{1} \left(x-{x}_{0},y-{y}_{0}\right)$

Wherein the image f₁ is an image obtained by conducting a translation transform using the image translation parameter (x₀, y₀) on the image f₂, and (x₀, y₀) is the offset.

Thus, processing of the first image registration to the original fluorescence images to obtain the first fluorescence images can be conducted by the Fourier transform; the specific process is expressed as Formula (1):
${F}_{2} \left(ξ, η\right) = {e}^{- j 2 π \left({ξx}_{0}+{ηy}_{0}\right)} ∗ {F}_{1} \left(ξ, η\right)$

Wherein ξ is the frequency in the x axis, η is the frequency in the y axis, e is the natural constant, π is the circumference ratio, j is the sine wave combination or cosine wave combination, and (x₀, y₀) is the offset.

It should be noted that image registration conducted by the Fourier transform is based on there are common bright points included in the two images, whereby the commonly similar portions of the overlap of the two images can be used to calculate the mutual power spectrum of the two images, thus to obtain the offset (x₀, y₀) according to the maximum mutual power spectrum; the specific process is shown as Formula (2):$\frac{F \left(ξ, η\right) ∗ F * \left(ξ, η\right)}{\left|F\left(ξ, η\right)∗F*\left(ξ, η\right)\right|} = {e}^{- j 2 π \left({ξx}_{0}+{ηy}_{0}\right)}$

Wherein F(ξ, η) _{*} F*(ξ, η) is the inner product for the Fourier transform for the two images (f₁ and f₂). |F(ξ, η) _{*} F*(ξ, η)| is the module of the inner product for the Fourier transform for the two images (f₁ and f₂). The maximum value of the mutual power spectrum obtained by Formula (2) is the offset (x₀, y₀).

In the step S202 of some embodiments, the original fluorescence image is conducted by a translation transform using the image translation parameter (x₀, y₀). It is that the original fluorescence image is translated along the direction of x axis for a distance of x₀ unit length and translated along the direction of y axis for a distance of y₀ unit length to thereby obtain the first fluorescence image.

In some specific embodiments, in order to promote the calculation efficiency, all of the image registrations in each cycle use the original fluorescence images of the first cycle (cycle 1) as the reference image. The offset of the first cycle is assumed to be (0, 0). The centroid of each bright point of the original fluorescence images of each cycle is determined by the binary image reconstruction process, to obtain the binary centroid reconstructed images of each cycle. Furthermore, the binary centroid reconstructed images in the later cycles (cycle 2 to cycle N) are transformed from space registration to frequency registration through the Fourier transform, to thereby obtain the offset (x₀, y₀). A rough image registration is performed for the original fluorescent images in each later cycle in accordance with the offset (x₀, y₀) to obtain the corresponding first fluorescence images thereof. The image registration performed in this manner can have a pixel-level accuracy.

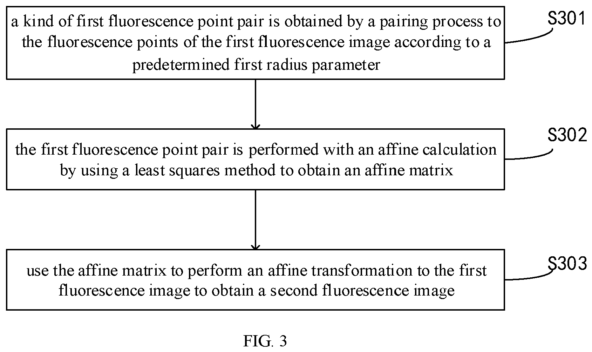

Please referring to Fig. 3, in some embodiments, the step S103 can include but is not limited to step S301 to step S303:

In the step S301, first fluorescence point pairs are obtained by a pairing process to the fluorescence points of the first fluorescence images according to a predetermined first radius parameter;

In the step S302, the first fluorescence point pairs is performed with an affine calculation by using a least squares method to obtain an affine matrix;

In the step S303, the affine matrix is used to perform an affine transformation to the first fluorescence images to obtain the second fluorescence images.

In the step S301 of some embodiments, since the first fluorescence images in different cycles of the same fluorescence channel (i.e., the base channel) are compliant with the characteristics of rigid deformation, it thus can use the first fluorescence images in differ cycles of the same channel (i.e., the base channel) which have common fluorescence points to perform the pairing process, so as to obtain the first fluorescence point pairs thereof. A plurality of first fluorescence point pairs are thereby obtained. Specifically, the first radius parameter can be determined by the actual requirement of business. For example, the first radius parameter is set to be R The first radius parameter R is used to perform the pairing process to two fluorescence points of the same fluorescence channel, to thus obtain the centroid offset of the common fluorescence points. For example, two arbitrary fluorescence points of the first fluorescence images obtained from different cycles of the same fluorescence channel are calculated by the Euclidean distance to obtain a Euclidean distance value (Distance). If the Euclidean distance value is smaller than the first radius parameter (Distance < R), then it indicates that the two fluorescence points match successful. The two fluorescence points are then collected into a set of the first fluorescence point pairs.

In the step S302 of some embodiments, the affine calculation is performed to the first fluorescence point pairs by using the least squares method. The coordinate values of the first fluorescence point pairs are introduced to solve four degrees of freedom, wherein the four degrees of freedom include amount of rotation, offset x, offset y, and amount of expansion/contraction. An affine matrix M which has six combination parameters can be obtained by introduction of the four degrees of freedom in the affine calculation.

In the step S303 of some embodiments, the second fluorescence image can be obtained by performing an affine transformation to the first fluorescence image through the affine matrix. The process can be specifically expressed as:
$\left[\begin{matrix}x ′ \\ y ′ \\ 1\end{matrix}\right] = \left[\begin{matrix}m 00 & m 01 & m 02 \\ m 10 & m 11 & m 12 \\ 0 & 0 & 1\end{matrix}\right] \left[\begin{matrix}x \\ y \\ 1\end{matrix}\right] = \left[\begin{matrix}m 00 * x + m 01 * y + m 02 \\ m 10 * x + m 11 + m 12 \\ 1\end{matrix}\right]$

Wherein x^{'} and y^{'} are the coordinates of the fluorescence points of the second fluorescence image; x and y are the coordinates of the fluorescence points of the first fluorescence image. The parameter set [m00, m01, m02, m10, m11, m12] expresses the affine matrix M.

The above process can more conveniently calculate the affine matrix between the first fluorescence images through the paired first fluorescence point pairs and the least squares method, to thereby reach the sub-pixel-level accuracy. Correction of four degrees of freedom is accomplished through calculation of the offset, amount of expansion/contraction and amount of rotation, at sub-pixel-level.

In one specific embodiment, in order to promote the calculation efficiency, all of the image registrations each use the original fluorescence images of the first cycle (cycle 1) as the reference image. The offset of the first cycle is assumed to be (0, 0). The specific process for the first image registration and the second image registration includes the following: The centroid of each bright point of the original fluorescence images of each cycle is performed with binary image reconstruction, to obtain the binary centroid reconstruction images of each cycle. It should be noted that the binary image reconstruction herein mainly concerns the calculation of the binarized size of the centroid of the bright point. For example, regarding bright point P (x, y), a foreground of each pixel point within a 3×3 area of the bright point is set to be 1. The binary transformation of the bright point is turned into calculate an area size of the bright point. The coordinate of this two dimensional float point is transformed into a binary area. The coordinate of the bright point is presented by the binary area, thereby to complete the binary reconstruction for the centroid of the bright point. Accordingly, the binary centroid reconstruction image is obtained.

Moreover, the binary centroid reconstruction images obtained in the following cycles (cycle 2 to Cycle N) are performed with image registration with the binary centroid reconstruction images obtained in the first cycle (cycle 1) based on the Fourier transform, which transforms the space domain registration to the frequency domain registration, to thereby obtain the offset (x₀, y₀). The original fluorescence images obtained in the following cycles are conducted with rough image registration according to the offset, to thereby obtain the corresponding first fluorescence images of the following cycles.

Moreover, the centroid of two fluorescence points of the first fluorescence images in the same channel are performed with the pairing process by using of the preset first radius parameter R. The centroid of two arbitrary fluorescence points of each of the first fluorescence images in different cycles of the same channel are calculated by the Euclidean distance to obtain a Euclidean distance value (Distance) thereof. If the Euclidean distance value is smaller than the first radius parameter (Distance < R), then it indicates that the two fluorescence points match successful. The two fluorescence points are then collected into a set of the fluorescence point pairs. The affine calculation is performed to the first fluorescence point pairs through the least squares method, wherein the coordinate values of the first fluorescence point pairs are introduced to solve four degrees of freedom to obtain an affine matrix M which has six combination parameters. The second fluorescence images are obtained through the affine transformation using the affine matrix to the first fluorescence images.

The step S201 to the step S202 and the step S301 to the step S303 mentioned above mainly includes performing the image registration using the in the same channel and performing the affine transformation to the centroid of the bright points, in combination with the pixel-level image registration and sub-pixel-level image registration, promote the accuracy of image registration.

Since in the different channels of the same cycle, the chromatic aberration of the fluorescence image is continuously changed from the center to the edge thereof, i.e., a distance between the fluorescence points in a central region is smaller and a distance between the fluorescence points in an edge region is larger, during the chromatic aberration correction stage, it requires the correction to be conducted from the central region toward the edge region to thereby promote the accuracy of the chromatic aberration correction.

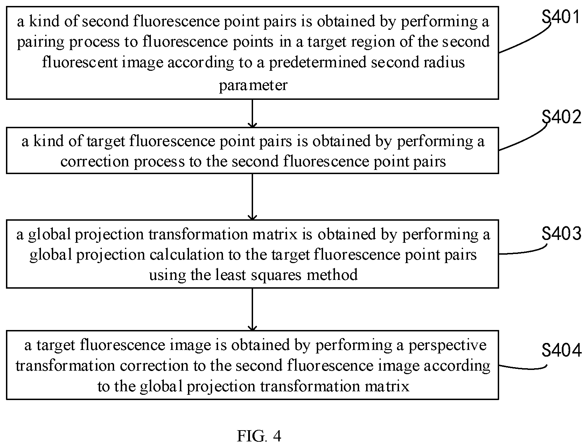

Referring to Fig. 4, in some embodiments, the step S104 can include but is not limited to step S401 to step S404:

In the step S401, second fluorescence point pairs are obtained by performing a pairing process to fluorescence points in a target region of the second fluorescent image according to a predetermined second radius parameter;

In the step S402, target fluorescence point pairs are obtained by performing a correction process to the second fluorescence point pairs;

In the step S403, a global projection transformation matrix is obtained by performing a global projection calculation to the target fluorescence point pairs using the least squares method;

In the step S404, target fluorescence images are obtained by performing a perspective transformation correction to the second fluorescence image according to the global projection transformation matrix.

In some embodiments of the step S401, the target region includes the central region (marked as A), the edge region (marked as F) and a plurality of annular regions (marked as B, C, D) between the central region and the edge region. The annular width of each of the annular regions is W. The annular regions, the central region and the edge region all are sampled regions.

Taking the central region A as an example, the second radius parameter can be determined according the actual business requirement. For example, the second radius parameter is R. The second radius parameter R is used to construct a fluorescence point template of the same channel for two fluorescence points from different fluorescence channels. It should be noted that the fluorescence point template of the same channel construction method is basically similar to step S501 to step S502 of a template construction method as disclosed below. The difference is that this fluorescence point template of the same channel construction method is based on the fluorescence points of different cycles in the same channel. Through this method, fluorescence point templates corresponding to four channels can be achieved used for pairing processing. For example, any two fluorescence points in the central region A of the second fluorescence images of different channels is conducted with the calculation of Euclidean distance to obtain the Euclidean distance value (Distance). If the Euclidean distance value is smaller than the second radius parameter (Distance < R), then it indicates that the two fluorescence points are match successful. The two fluorescence points are then collected into a set of the second fluorescence point pairs.

Likewise, two fluorescence points of each annular region are conducted with the pairing processing according to the radius parameter R of a circle. It should be noted that since there are too many changes in the edge region, the sampled fluorescence point pairs by directly sampling based on the distance is not correct. Thus, in the embodiments of the present invention, the sampling and correction are simultaneously conducted from the center region to the edge region. That is, prior to performing sampling of the fluorescence points in each annular region, it requires to perform correction to the annular region using the projection transformation matrix which is calculated according an inner annular region adjacent to the annular region. The sampling is performed to the annular region after the completion of the correction. That is the sampling result of each annular region depends on the projection matrix obtained from the sampling of the annular inner region. The sampling operation of the annular region is required to be conducted after the perspective transformation of the inner side of the annular region. Two arbitrary fluorescence points of each annular region of the second fluorescence image are performed with the calculation of Euclidean distance to obtain a Euclidean distance value thereof. If the Euclidean distance value is smaller than the second radius parameter (Distance < R), then it indicates that the two fluorescence points are match successful. The two fluorescence points are then collected into a set of the second fluorescence point pairs.

In the step 402 of some embodiments, the least squares method is conducted to the second fluorescence point pairs to obtain parameters of the geometric transformation by sloving a system of equations for geometric transformation parameters, wherein the system of equations generally includes eight compound transformation parameters of the geometric transformation. According to this system of equations, it can conveniently obtain a homographic transformation matrix corresponding to the central region and each annular region. The fluorescence points in the corresponding central region and annular region are performed with correction via the homographic transformation matrix. Accordingly, the correction processing to the second fluorescence point pairs is achieved to obtain the target fluorescence point pairs.

Furthermore, when processing chromatic aberration correction for the edge region, it can assume that a set of the fluorescent points of the edge region is p, and a set of the fluorescence points after correction is p', p'= (F*D*C*B*A) *p. According to the associative property of matrix multiplication, i.e., (A*B)*C=A*(B*C), it can obtain p'=F*(D*(C*(B*(A*p)))). Thus, the homographic transformation matrix for the edge region F can be expressed as Matrix= (F*D*C*B*A). The fluorescence points in the edge region are conducted with chromatic aberration correction using the corresponding homographic transformation matrix (Matrix), to achieve the correction processing to the second pairs of fluorescence points to obtain the target fluorescence point pairs.

In some embodiments of the step S403, the sampled fluorescence point pairs are all from the matched fluorescence point pairs and the projection matrix of respective annular region. Thus, six degrees of freedom can be solved by substituting coordinate values of the target fluorescence point pairs into the globe projection calculation using the least squares method to all matched target fluorescence point pairs, wherein the six degrees of freedom include the compound transformation parameters of amount of rotation, offset x, offset y, reflection, inclination, and amount of expansion/contraction. A globe projection transformation matrix including eight geometric transformation parameters is obtain by substituting the six degrees of freedom the globe projection calculation.

In the step S404 of some embodiments, a perspective transformation correction is performed to the second fluorescence image using the holographic projection transformation matrix to obtain the target fluorescence image. The specific process can be expressed as:
$\left[\begin{matrix}x ′ \\ y ′ \\ 1\end{matrix}\right] = \left[\begin{matrix}{m}_{0} & {m}_{1} & {m}_{2} \\ {m}_{3} & {m}_{4} & {m}_{5} \\ {m}_{6} & {m}_{7} & 1\end{matrix}\right] \left[\begin{matrix}x \\ y \\ 1\end{matrix}\right]$

Wherein x^{'} and y^{'} are the coordinates of the fluorescence points of the target fluorescence image; x and y are the coordinates of the fluorescence points of the second fluorescence image. The parameter set [m00, m01, m02, m10, m11, m12] expresses the globe projection transformation matrix.

The above disclosure of the step S401 to the step 404 promotes the accuracy of matching of the fluorescence point pairs by the chromatic aberration method which is conducted continuously outward extending from the center region to the edge region, in combination with using the radius parameter R to perform the calculation of the Euclidean distance and then using the Euclidean distance value for pairing the fluorescence point pairs. In the same time, by using the centroid of the fluorescence point to calculate the globe projection transformation matrix, it can precisely calculate the transformation in different channels under a wide view. Thus, micro deformations in the fluorescence channels and chromatic aberration between the fluorescence channels can be better corrected to promote the accuracy of chromatic aberration.

Since, during the constructing process of the template, in each channel of each cycle of the target fluorescence image there is about a quarter (1/4) of single strands that will brighten, it indicated that the bases in different channels of the same cycle are complementary to each other. That is, a union of the bases of the four channels (ATCG channels) of a same cycle thereof can be used as a complete template. It is possible that there is no intersection between different channels of the same cycle, whereby a complete template cannot be obtained through pairing the fluorescence images of a single cycle. The bases of the same single strands responding in different cycles can be the same or possibly be different; thus, there can be an intersection between the fluorescence channels of different cycles. Thus, for increasing the accuracy of the complete template, it requires to find out the positions of all single strands and the fluorescence points in a plurality of cycles need to be combined by a combination processing. Coordinates of all single strands are obtained after comprehensive consideration, thereby to construct the sequencing template according to the coordinates of all single strands.

In the embodiments of the present invention, the construction of the sequencing template is based on the aggregation algorithm of DBSCAN (Density-based spatial clustering of applications with noise), which sets the total number of the cycles for the sequencing template to be referred to. In the same position of the fluorescence image of each cycle, whether the base existed or not is detected. If a certain signal is detected for multiple times in multiple cycles, it is deemed that there is a base existed in the position to be tested.

In some embodiments of the step S105, coordinates of the fluorescence points of the target fluorescence images are determined to obtain the coordinate data of the fluorescence points thereof. According to the set total number of the cycles T that the sequencing template is referred to, peak values (peak) of the coordinates of the fluorescence points of the target fluorescence images in T cycles are considered comprehensively to obtain the coordinate data of the fluorescence points.

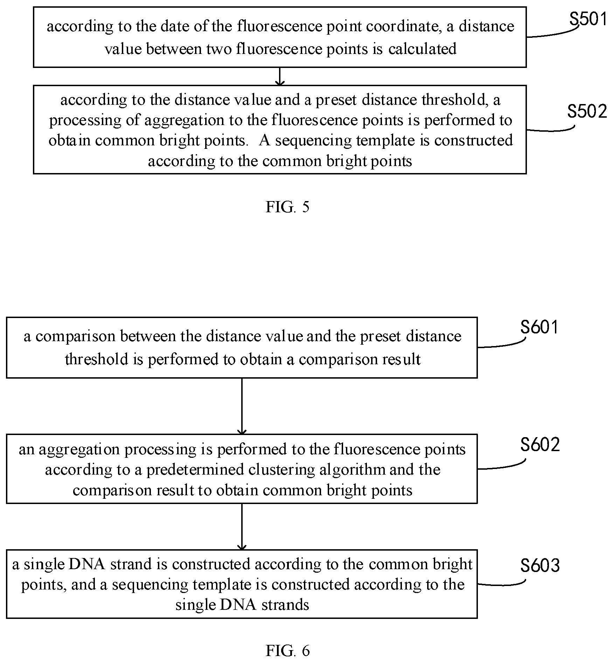

Please referring to Fig. 5. In some embodiments, the step S106 can include but is not limited to step S501 to step S502:

In the step S501, according to the data of the fluorescence point coordinates, a distance value between two fluorescence points is calculated;

In the step S502, according to the distance value and a preset distance threshold, a processing of aggregation to the fluorescence points is performed to obtain common bright points. A sequencing template is constructed according to the common bright points.

In some embodiments of the step S501, a Euclidean distance value between a peak value of the coordinate of a fluorescence point and a peak value of the coordinate of a nearest neighboring fluorescence point is calculated according the coordinate data of the fluorescence points, to thereby obtain the distance value between the two fluorescence points.

Referring to Fig. 6, in some embodiments, the step S502 includes but is not limited to step S601 to step S603.

In the step S601, a comparison between the distance value and the preset distance threshold is performed to obtain a comparison result;

In the step S602, an aggregation processing is performed to the fluorescence points according to a predetermined clustering algorithm and the comparison result to obtain common bright points;

In the step S603, a single DNA strand is constructed according to the common bright points, and a sequencing template is constructed according to the single DNA strands.

In some embodiments of the step S601, the distance value and the preset distance threshold are compared, and the comparison result is generated according to the relationship between the distance value and the preset distance threshold, wherein the value of the preset distance threshold can be determined according to the actual requirement, without restriction in these embodiments.

In the step S602 of some embodiments, the distance threshold can be used as a combined distance threshold for aggregation to the fluorescence points. According to the predetermined clustering algorithm and the comparison result, if a fluorescence point does not belong to the set of common bright points, and a distance between the fluorescence point and the common bright point A is less than or equal to the preset distance threshold, it is deemed that the fluorescence point and the bright point A are identical to each other. The center of the fluorescence point and the center of the common bright point are updated. If a fluorescence point does not belong to the set of common bright points, and a distance between the fluorescence point and the common bright point is larger than the preset distance threshold, it is deemed that the fluorescence point is a new template point, which is directly added to the sequencing template to act as a new common bright point. Thus, by performing calculation of the distance value and aggregation to each fluorescence point, a corresponding set of common bright points is obtained in this manner.

In some embodiments of the step S603, for extracting the coordinate data of the common bright points, it is necessary to conduct a frequency filtering. If the number of appearances of a common bright point appeared in different cycles is less than the preset threshold T, i.e., a bright point do not glow in some of the cycles, then the bright point is abandoned. The DNA single strand is constructed according to the coordinate data of the common bright points. Specifically, the coordinate of each common bright point represents a DNA single strand. The sequencing template is obtained by performing a statistic summary to all of the DNA single strands.

In the above mentioned step S501 to step S502, and step S601 to S603, the sequencing template is constructed based on the fluorescence points of a plurality cycles, and, at the same time, the extraction of the common bright points is performed by using the aggregation algorithm of DBSCAN to proceed with the template clustering. Thus, the impure bright points and the noise bright points can be better filtered. Thus, the sequencing template obtained accordingly can be more comprehensive and accurate. Furthermore, the positional deviations of the same common bright points in different cycles can be more effectively combined, and the positional distinction of two adjacent common bright points can be more effectively processed, whereby the accuracy of the sequencing template can be promoted.

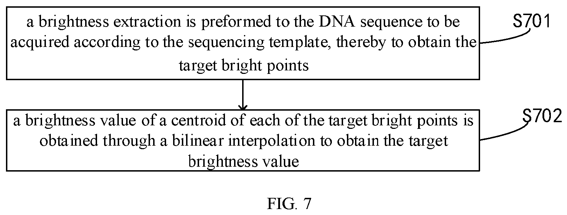

Please referring to Fig. 7, in some embodiments, the step S107 can include but is not limited to step S701 to step S702:

In the step S701, a brightness extraction is preformed to the DNA sequence to be acquired according to the sequencing template, thereby to obtain the target bright points;

In the step S702, a brightness value of a centroid of each of the target bright points is obtained through a bilinear interpolation to obtain the target brightness value.

In some embodiments of the step S701, when extracting the brightness of the DNA sequence to be acquired according to the sequencing template, the centroid position of the fluorescence point is extracted to be used as the position of the target bright point, to thereby obtain the target bright point.

In some embodiments of the step S702, since the intensity distribution of the fluorescence point matches the Poisson distribution (i.e., meeting the function characteristic of the Point-Spread Function), thus, in the stage of extraction of brightness intensity, the extraction can be performed to the brightness intensity of the sub-pixel of the target bright point (i.e., centroid position of the target bright point) through the bilinear interpolation. The brightness value of the sub-pixel is used as the brightness value of the centroid of the target bright point, i.e., the target brightness value.

It should be noted that in order to increase the efficiency of data processing, the embodiments of the present invention can introduce the x86 instruction set of SSE (Streaming SIMD Extensions), AVX (Advanced Vector Extensions), etc. to accelerate the construction of the template. The accuracy of the template can be promoted and at the same time the speed of data processing can be increased to thereby meet the requirement of industrialized production.

The image registration and template construction method proposed by the present invention includes the following: obtaining the original fluorescence images to be registered, performing the first image registration to the original fluorescence images to obtain the first fluorescence images, performing the second image registration to the first fluorescence images to obtain the second fluorescence images. That is, the present invention processes two image registrations whereby it can perform image registrations having different pixel levels to the original fluorescence images, from light to darkness, thereby to increase the accuracy of image registration in the same fluorescence channel during different cycles. Based on the binary image reconstruction performed to the fluorescence images in the same fluorescence channel and image registration performed to the fluorescence images through the affine transformation based on the centroid of bright points, thus achieving the pixel-level image registration and sub-pixel-level image registration in combination, the accuracy of image registration is enhanced. Furthermore, the processing of chromatic aberration correction to the second fluorescence image to obtain the target fluorescence images is able to more correctly estimate the chromatic aberrations in different channels. The chromatic aberration based on sampling of fluorescent point pairs which is conducted continuously outward extending from the center region to the edge region, in combination with the strategy of using the radius parameter R to perform the calculation of the Euclidean distance, the accuracy of pairing of the fluorescence point pairs can be promoted. In the same time, by using the centroid of the fluorescence point to calculate the holographic projection transformation matrix, it can precisely calculate the transformations in different channels under a wide view. Thus, micro deformations in the fluorescence channels and chromatic aberration between the fluorescence channels can be better corrected to promote the accuracy of chromatic aberration. Finally, the present invention proposes the extraction of coordinates of fluorescence points of the target fluorescence images to obtain the coordinate data of fluorescence points, the aggregation processing to the fluorescence points according to the coordinate data of fluorescence points to obtain the sequencing template, and the brightness extraction to the DNA sequence to be acquired according to the sequencing template to obtain the corresponding target brightness values of the target bright points. Thus, the present invention can perform the template construction based on the fluorescence points and the coordinate data of fluorescent points of a plurality of cycles, to promote the comprehensiveness and accuracy of the sequencing template. At the same time, through the brightness extraction of the DNA sequence to be obtained by the sequencing template, the value of target brightness corresponding to the target bright point is obtained. In this manner, the template construction can be performed based on the fluorescence points and the coordinate data of the fluorescence points of a plurality of cycles; thus, the comprehensiveness and accuracy of the sequencing template can be increased. At the same time, the efficiency and accuracy of extraction of luminous intensity can be effectively improved through the brightness extraction by the sequencing template from the DNA sequence to be acquired. The embodiments of the present invention optimize the art through the image registration stage, the chromatic aberration correction stage, the template construction stage and the luminous intensity extraction stage, thereby to fully optimize the procedure of DNA sequencing.

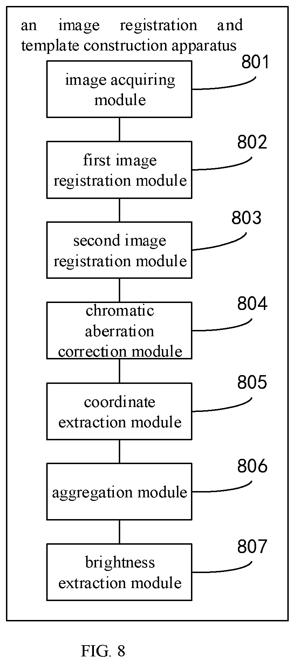

Please refer to Fig. 8. The embodiment of the present invention also provides an image registration and template construction apparatus to realize the above-mentioned image registration and template construction method. The apparatus includes:
An image acquiring module 801, which is used for obtaining an original fluorescence image to be registered;
A first image registration module 802, which is used for performing a processing of a first image registration to the original fluorescence image to obtain a first fluorescence image;
A second image registration module 803, which is used for performing a processing of a second image registration to the first fluorescence image to obtain a second fluorescence image;
A chromatic aberration correction module 804, which is used for performing a processing of chromatic aberration correction to the second fluorescence image to obtain a target fluorescence image;
A coordinate extraction module 805, which is used for performing a coordinate extraction to fluorescence points of the target fluorescence image to obtain data of fluorescence point coordinate;
An aggregation module 806, which is used for performing a processing of aggregation to the fluorescent points according to the data of fluorescence point coordinate to obtain a sequencing template;
A brightness extraction module 807, which is used for performing a brightness extraction to a DNA sequence to be acquired according to the sequencing template to obtain corresponding target brightness values of the target bright points.

The specific performing manner of the image registration and template construction apparatus is basically similar to the specific embodiments of the method of the above-mentioned image registration and template construction method; thus, a detailed description of the apparatus is omitted.

The present invention further provides an electronic device. The electronic device includes: a storage unit, a processing unit, a program which is stored in the storage unit and can be executed by the processing unit, and a cable assembly which can carry out information communication between the processing unit and the storage unit. The method according to the first aspect of the present invention is carried out when the program is executed by the processing unit. The electronic device can include any intelligent terminal such as a tablet computer, an on-board computer, etc.

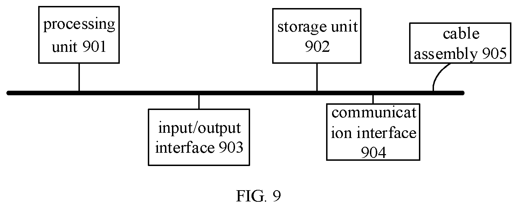

Please refer to Fig. 9. Fig. 9 illustrates the hardware structure of the electronic device in accordance with another embodiment. The electronic device includes:

A processing unit 901, which can be embodied by using a general-purposed CPU (Central Processing Unit), a microprocessor, an ASIC (Application Specific Integrated Circuit), or an integrated circuit or a plurality of integrated circuits, etc. The processing unit is used for executing related programs to realize the technical proposals provided by the embodiments of the present invention;

A storage unit 902, which can be embodied by using a ROM (Read Only Memory), a dynamic storage unit, or a RAM (Random Access Memory), etc. The storage unit 902 can store therein an operating system and other application programs. The technical proposals provided by the embodiments of the present invention are carried out through software or firmware, wherein related program codes of the software or firmware are stored in the storage unit 902, and transferred to the processing unit 901 and executed thereby to realize the image registration and template construction method of the present invention;

An input/output interface 903, which is used for carrying out information input and output;

A communication interface 904, which is used for carrying out a communication exchange between the device of the present invention and other devices. The communication exchange can be achieved by a wired manner, for example, through USB (Universal Serial Bus), network cables, etc. or by a wireless manner, for example, through mobile a network, WIFI, Bluetooth, etc;

A cable assembly 905, which is used for transmitting information between the units (for example, the processing unit 901, the storage unit 902, the input/output interface 903 and the communication interface 904);

Wherein the processing unit 901, the storage unit 902, the input/output interface 903 and the communication interface 904 realize the communication connection with each other within the device through the cable assembly 905.

The embodiment of the present invention further provides a storage medium which can be a computer-readable storage medium for a readable storage by the computer. The storage medium stores therein a program or a plurality of programs. When the program or the plurality of programs is executed by the processing unit, the image registration and template construction method mentioned above is carried out.

The storage unit is a non-transitory, computer-readable storage medium, which can be used for storing therein non-transitory software programs and non-transitory, computer-executable programs. In addition, the storage unit can include a high speed, random-access storage unit and can also include a non-transitory storage unit, for example, at least a magnetic disc storage unit, a flash storage unit or other non-transitory storage units. In some embodiments, the storage unit can optionally include storage units remote from the processing unit. These remote storage units can be connected to the processing unit through a network. The embodiments of the above-mentioned network can include but is not limited to internet, enterprise intranet, local area network, mobile communication network and a combination thereof.

The image registration and template construction method, image registration and template construction apparatus, electronic device and storage medium provided by the embodiments of the present invention, the original fluorescence images to be registered are obtained, the first image registration is performed to the original fluorescence images to obtain the first fluorescence images, the second image registration is performed to the first fluorescence images to obtain the second fluorescence images. The present invention processes two image registrations whereby the present invention can perform image registrations having different pixel levels to the original fluorescence images, from light to darkness, thereby to increase the accuracy of image registration in the same fluorescence channel during different cycles. Based on the image binary registration in the same channel and based on registration through the affine transformation of centers of mass of bright points, which combines the pixel-level image registration and sub-pixel-level image registration, the accuracy of image registration is enhanced. Furthermore, the processing of chromatic aberration correction to the second fluorescence images to obtain the target fluorescence images is able to more correctly estimate the chromatic aberrations in different channels. The chromatic aberration sampling method which is conducted continuously outward extending from the center to the edge, in combination with the strategy of using the radius R of a circle to perform the calculation of the Euclidean distance, the accuracy of pairing of the fluorescence points can be promoted. In the same time, by using the center of mass of the fluorescence point to calculate the holographic projection transformation matrix, it can precisely calculate the situations of transformation in different channels under a wide view. Thus, micro deformations in the fluorescence channels and chromatic aberration between the fluorescence channels can be better corrected to promote the accuracy of chromatic aberration. Finally, the present invention proposes the extraction of coordinate of fluorescence points of the target fluorescence images to obtain the data of fluorescence coordinate, the aggregation processing to the fluorescence points according to data of the fluorescence coordinates to obtain the sequencing template, and the brightness extraction to the DNA sequence to be acquired according to the sequencing template to obtain the corresponding target brightness values of the target bright points. Thus, the present invention can perform template construction based on fluorescence points and data of fluorescent coordinates of a plurality of cycles, to promote the comprehensiveness and accuracy of the sequencing template. At the same time, through the brightness extraction of the DNA sequence to be obtained by the sequencing template, the efficiency and accuracy of extraction of luminous intensity can be effectively improved. The embodiments of the present invention optimize the art through the image registration stage, the chromatic aberration correction stage, the template construction stage and the luminous intensity extraction stage, thereby to fully optimize the procedure of DNA sequencing.

The descriptions of the embodiments of the present invention are only for more clearly explain the technical schemes of the present invention, not constructing limitations to the technical schemes provided by the present invention. A person skilled in the art pertained to the present invention can understand that following the technical progress and the appearance of new application situation, the technical schemes provided the by embodiments of the present invention can also be used to address the similar problems.

It can be understood by those skilled in this technical field that the technical proposals disclosed by Figs. 1-7 do not form limitations to the embodiments of the present invention, which can include more or less steps, a combination of some of the steps shown in the figures or different steps from those shown in the figures.

The embodiments of the apparatus and device as shown are only illustrative. The separated elements as illustrated can be or can be not physically separated. Thus, they can be positioned at one place or distributed over a plurality of networks. A portion of or all of the modules can be selected according to the actual requirements to realize the objects of the present invention.

It can be understood by those skilled in the art that a portion or all of the steps, systems, functional modules/units of the apparatus/device can be embodied into software, firmware, hardware or an appropriate combination thereof.

The terminologies used above in the specification of the present invention, i.e., "first", "second", "third", "fourth" etc. (if existed), is used for distinguishing the elements rather than for describing the specific order or sequence. If should be understood these ordinal numbers can be exchange, when the situation is suitable, whereby the embodiments of the present invention as disclosed herein can also be embodied in other sequence in addition to those shown in the drawings or described herein. Moreover, the terminologies "include" and "have" and any variations thereof are intended to have a non-exclusive coverage. For example, for a process, method, system, product or equipment including a series of steps or units, it is not limited to the clearly listed steps or units, but can include other steps or units of the process, method, system, product or equipment, which are not clearly listed or are inherent therein.

It should be understood that, in the present invention, "at least a" indicates one or a plurality, "a plurality of" indicates two or more. "A and/or B" indicates the relationship between the related elements, which can mean three types of relationship: only A exists, only B exist, and both A and B exist, wherein A, B each can be singular or plural. The symbol "/" indicates that the former and the latter elements are related to each other with an "or" relationship. "At least one of following items" or similar expression thereof indicates an arbitrary combination of the items, inclusive of an arbitrary combination of a single item or a plurality of items. For example, at least of a, b, c can express the following situations: a, b, c, "a and b", "a and c", "b and c" or "a and b and c", wherein a, b, c each can be singular or plural.

It can be understood that the apparatus and method disclosed by the embodiments of the present invention can be realized in other manners. For example, the above-mentioned embodiments of the apparatus are only illustrative. For example, the above-mentioned division of the units is only a division of logic function. They can be divided by other manner when put into an actual practice. For example, a plurality of units or elements can be combined together or assembled into another system, or some features thereof can be omitted or not executed. On the other hand, the coupling or direct connection or communicative connection between the units as shown or discussed can be achieved through some interfaces. The indirect coupling or communicative connection between the apparatus or units can be electric, mechanical, or other forms.

The units mentioned above are disclosed as separated parts. They can be or can be not physically separatable. The element disclosed as a unit can be or can be not physically separatable; that is, it can be positioned in a place or distributed over a plurality of network units. The objective of the proposal of the embodiments of the present invention can be achieved by choosing a portion or all of the units according to the actual requirement.

In addition, the various functional units shown in the embodiments of the present invention can be combined into a single processing unit. Or the various functional units each can exist physically independently. Or two or more functional units can be assembled into a single unit. The above assembled unit can be embodied in a hardware form, or in a form of functional unit of software.

If the assembled unit is embodied in the form of functional unit of software and sold or used as an independent product, the assembled unit can be stored in a readable storage medium of a computer. Based on this understanding, the inherent feature of the technical scheme of the present invention, or in other words, what the part of the present invention can contribute to the art, or a part of all of the technical scheme thereof can be embodied in a software product. The software product of computer can be stored in a storage medium including a plurality of instructions whereby a computer equipment can carry out all or a portion of the steps of the method of the various embodiments of the present invention. The computer equipment can be a personal computer, a server or a network equipment, etc. The aforementioned storage medium includes: a USB flash drive, an external hard drive, a ROM (read-only memory), a RAM (random-access memory), a magnetic disk, or an optical disk, etc, which can store programs therein.

The above disclosures, in reference to the drawings, explain the preferred embodiments of the present invention, and accordingly are not to be construed as limitations of the patent scope of the present invention. Any modification, equivalent exchange and improvement within the scope of the claims of the present invention may be made by those ordinarily skilled in the art.

## Claims

1. A computer-implemented image registration and template construction method comprising:
obtaining original fluorescence images to be registered in a plurality of cycles, the original fluorescence images of each cycle comprising original fluorescence images in four fluorescence channels corresponding to four kinds of bases;
performing a processing of a first image registration to the original fluorescence images of different cycles in a same fluorescence channel to obtain first fluorescence images;
performing a processing of a second image registration to the first fluorescence images of the same fluorescence channel to obtain second fluorescence images;
performing a processing of a chromatic aberration correction to the second fluorescence images of the four fluorescence channels in a same cycle to obtain target fluorescence images;
performing a coordinate extraction to fluorescence points of the target fluorescence images to obtain data of fluorescence point coordinates;
performing a processing of aggregation to the fluorescence points according to the data of fluorescence point coordinates to obtain a sequencing template; and
performing a processing of brightness extraction to a DNA sequence to be acquired according to the sequencing template to obtain corresponding target brightness values of target bright points;
wherein the step of performing a processing of a chromatic aberration correction to the second fluorescence images of the four fluorescence channels in a same cycle to obtain target fluorescence images, comprises:
performing a pairing processing to the fluorescence points in a target region of the second fluorescence images of the four fluorescence channels in the same cycle according to a predetermined second radius parameter to obtain second fluorescence point pairs;
performing a correction processing to the second fluorescence point pairs to obtain target fluorescence point pairs;
performing a global projection calculation to the target fluorescence point pairs using a least squares method to obtain a global projection transformation matrix; and
performing a perspective transformation correction to the second fluorescence images according to the global projection transformation matrix to obtain the target fluorescence images.

2. The computer-implemented image registration and template construction method according to Claim 1, **characterized in that** the step of performing a processing of a first image registration to the original fluorescence images of different cycles in a same fluorescence channel to obtain first fluorescence images, includes:
performing a binary image reconstruction to the original fluorescence images of different cycles in the same fluorescence channel to obtain binary centroid reconstructed images, and performing a Fourier transform to the binary centroid reconstructed images to obtain image translation parameters; and
performing a translation transform to the original fluorescence images of different cycles in the same fluorescence channel according to the image translation parameters to obtain the first fluorescence images.

3. The computer-implemented image registration and template construction method according to Claim 1, **characterized in that** the step of performing a processing of a second image registration to the first fluorescence images of the same fluorescence channel to obtain second fluorescence images, includes:
performing a pairing processing to the fluorescence points of the first fluorescence images according to a predetermined first radius parameter to obtain first fluorescence point pairs;
performing an affine calculation to the first fluorescence point pairs using a least squares method to obtain an affine matrix; and
performing an affine transformation to the first fluorescence images of the same fluorescence channel using the affine matrix to obtain the second fluorescence images.

4. The computer-implemented image registration and template construction method according to Claim 1, **characterized in that** the step of performing a processing of aggregation to the fluorescence points according to the data of fluorescence point coordinates to obtain a sequencing template, includes:
calculating a distance value between every two of the fluorescence points according the data of fluorescence point coordinates; and
performing a processing of aggregation to the fluorescence points according to the distance value and a predetermined distance threshold to obtain common bright points, and constructing the sequencing template according to the common bright points.

5. The computer-implemented image registration and template construction method according to Claim 4, **characterized in that** the step of performing a processing of aggregation to the fluorescence points according to the distance value and a predetermined distance threshold to obtain common bright points, and constructing the sequencing template according to the common bright points, includes:
comparing the distance value and a predetermined distance threshold to obtain a comparison result;
performing a processing of aggregation to the fluorescence points according to a predetermined clustering algorithm and the comparison result to obtain the common bright points; and
constructing a single DNA strand according to the common bright points and constructing the sequencing template according to the single DNA strand.

6. The computer-implemented image registration and template construction method according to any one of Claims 1-5, **characterized in that** the step of performing a processing of brightness extraction to a DNA sequence to be acquired according to the sequencing template to obtain target brightness values of corresponding target bright points, includes:
performing a brightness extraction to the DNA sequence to be acquired according to the sequencing template, to obtain the target bright points; and
extracting the brightness value of a centroid of each target bright point through a bilinear interpolation to obtain the target brightness value.

7. An electronic device, **characterized in that** the electronic device includes a storage unit, a processing unit, a program stored in the storage unit and executable by the processing unit, and a cable assembly for carrying out information communication between the processing unit and the storage unit, wherein when the program is executed by the processing unit, the image registration and template construction method according to any one of Claims 1 to 6 is carried out.

8. A storage medium, the storage medium being a storage medium readable by a computer and used as a readable memory for the computer, **characterized in that** the storage medium stores therein a program or a plurality of programs, wherein when the program or the plurality of programs is executed by a processing unit or a plurality of processing units, the image registration and template construction method of any one of Claims 1-6 is carried out.

## Patentansprüche

1. Computerimplementiertes Verfahren zur Bildregistrierung und Templaterstellung, umfassend:
Erlangen von Originalfluoreszenzbildern zum Registrieren in einer Vielzahl von Zyklen, wobei die Originalfluoreszenzbilder jedes Zyklus Originalfluoreszenzbilder in vier Fluoreszenzkanälen umfassen, die vier Arten von Basen entsprechen;
Durchführen einer Verarbeitung einer ersten Bildregistrierung an den Originalfluoreszenzbildern unterschiedlicher Zyklen im selben Fluoreszenzkanal, um erste Fluoreszenzbilder zu erlangen;
Durchführen einer Verarbeitung einer zweiten Bildregistrierung an den ersten Fluoreszenzbildern desselben Fluoreszenzkanals, um zweite Fluoreszenzbilder zu erlangen;
Durchführen einer Verarbeitung einer chromatischen Aberration an den zweiten Fluoreszenzbildern der vier Fluoreszenzkanäle im selben Zyklus, um Zielfluoreszenzbilder zu erlangen;
Durchführen von Koordinatenextraktion an Fluoreszenzpunkten der Zielfluoreszenzbilder, um Daten von Fluoreszenzpunktkoordinaten zu erlangen;
Durchführen einer Verarbeitung der Aggregierung an den Fluoreszenzpunkten gemäß den Daten der Fluoreszenzpunktkoordinaten, um ein Sequenzierungstemplat zu erlangen; und
Durchführen einer Verarbeitung der Helligkeitsextraktion an einer zu erfassenden DNA-Sequenz gemäß dem Sequenzierungstemplat, um entsprechende Zielhelligkeitswerte von hellen Zielpunkten zu erlangen;
Wobei der Schritt des Durchführens einer Verarbeitung einer chromatischen Aberration an den zweiten Fluoreszenzbildern der vier Fluoreszenzkanäle im selben Zyklus, um Zielfluoreszenzbilder zu erlangen, umfasst:
Durchführen einer Paarbildungsverarbeitung an den Fluoreszenzpunkten in einer Zielregion der zweiten Fluoreszenzbilder der vier Fluoreszenzkanäle im selben Zyklus gemäß einem vorgegebenen zweiten Radiusparameter, um zweite Fluoreszenzpunktpaare zu erlangen;
Durchführen einer Korrekturverarbeitung an den zweiten Fluoreszenzpunktpaaren, um Zielfluoreszenzpunktpaare zu erlangen;
Durchführen einer globalen Projektionsberechnung an den Zielfluoreszenzpunktpaaren unter Verwendung der Methode der kleinsten Quadrate, um eine globale Projektionstransformationsmatrix zu erlangen; und
Durchführen einer Perspektiventransformationskorrektur an den zweiten Fluoreszenzbildern gemäß der globalen Projektionstransformationsmatrix, um die Zielfluoreszenzbilder zu erlangen.

2. Computerimplementiertes Verfahren zur Bildregistrierung und Templaterstellung nach Anspruch 1, **dadurch gekennzeichnet, dass** der Schritt des Durchführens einer Verarbeitung einer ersten Bildregistrierung an den Originalfluoreszenzbildern unterschiedlicher Zyklen im selben Fluoreszenzkanal, um erste Fluoreszenzbilder zu erlangen, beinhaltet:
Durchführen einer Binärbildrekonstruktion an den Originalfluoreszenzbildern unterschiedlicher Zyklen im selben Fluoreszenzkanal, um rekonstruierten Schwerpunktbinärbilder zu erlangen, und Durchführen einer Fourier-Transformation an den rekonstruierten Schwerpunktbinärbildern, um Bildtranslationsparameter zu erlangen; und
Durchführen einer Translationstransformation an den Originalfluoreszenzbildern unterschiedlicher Zyklen im selben Fluoreszenzkanal gemäß den Bildtranslationsparametern, um die ersten Fluoreszenzbilder zu erlangen.

3. Computerimplementiertes Verfahren zur Bildregistrierung und Templaterstellung nach Anspruch 1, **dadurch gekennzeichnet, dass** der Schritt des Durchführens einer Verarbeitung einer zweiten Bildregistrierung an den ersten Fluoreszenzbildern desselben Fluoreszenzkanals, um zweite Fluoreszenzbilder zu erlangen, beinhaltet;
Durchführen einer Paarbildungsverarbeitung an den Fluoreszenzpunkten der ersten Fluoreszenzbilder gemäß einem vorgegebenen ersten Radiusparameter, um erste Fluoreszenzpunktpaare zu erlangen;
Durchführen einer Affinberechnung an den ersten Fluoreszenzpunktpaaren unter Verwendung der Methode der kleinsten Quadrate, um eine Affinmatrix zu erlangen; und
Durchführen einer Affintransformation an den ersten Fluoreszenzbildern desselben Fluoreszenzkanals unter Verwendung der Affinmatrix, um die zweiten Fluoreszenzbilder zu erlangen.

4. Computerimplementiertes Verfahren zur Bildregistrierung und Templaterstellung nach Anspruch 1, **dadurch gekennzeichnet, dass** der Schritt des Durchführens einer Verarbeitung der Aggregierung an den Fluoreszenzpunkten gemäß den Daten der Fluoreszenzpunktkoordinaten, um ein Sequenzierungstemplat zu erlangen, beinhaltet:
Berechnen eines Distanzwerts zwischen je zwei Fluoreszenzpunkten gemäß den Daten der Fluoreszenzpunktkoordinaten; und
Durchführen einer Verarbeitung der Aggregierung an den Fluoreszenzpunkten gemäß dem Distanzwert und einem vorgegebenen Distanzschwellenwert, um gemeinsame helle Punkte zu erlangen, und Erstellen des Sequenzierungstemplats gemäß den gemeinsamen hellen Punkten.

5. Computerimplementiertes Verfahren zur Bildregistrierung und Templaterstellung nach Anspruch 4, **dadurch gekennzeichnet, dass** der Schritt des Durchführens einer Verarbeitung der Aggregierung an den Fluoreszenzpunkten gemäß dem Distanzwert und einem vorgegebenen Distanzschwellenwert, um gemeinsame helle Punkte zu erlangen, und Erstellen des Sequenzierungstemplats gemäß den gemeinsamen hellen Punkten beinhaltet:
Vergleichen des Distanzwerts und eines vorgegebenen Distanzschwellenwerts, um ein Vergleichsergebnis zu erlangen;
Durchführen einer Verarbeitung der Aggregierung an den Fluoreszenzpunkten gemäß einem vorgegebenen Clusterbildungsalgorithmus und dem Vergleichsergebnis, um die gemeinsamen hellen Punkte zu erlangen; und
Erstellen eines einzelnen DNA-Strangs gemäß den gemeinsamen hellen Punkten und Erstellen des Sequenzierungstemplats gemäß dem einzelnen DNA-Strang.

6. Computerimplementiertes Verfahren zur Bildregistrierung und Templaterstellung nach einem der Ansprüche 1 bis 5, **dadurch gekennzeichnet, dass** der Schritt des Durchführens einer Verarbeitung der Helligkeitsextraktion an einer zu erfassenden DNA-Sequenz gemäß dem Sequenzierungstemplat, um Zielhelligkeitswerte von entsprechenden hellen Zielpunkten zu erlangen, beinhaltet:
Durchführen einer Helligkeitsextraktion an der zu erfassenden DNA-Sequenz gemäß dem Sequenzierungstemplat, um die hellen Zielpunkte zu erlangen; und
Extrahieren des Helligkeitswerts eines Schwerpunkts jedes hellen Zielpunkts durch eine bilineare Interpolation, um die Zielhelligkeitswerte zu erlangen.

7. Elektronische Vorrichtung, **dadurch gekennzeichnet, dass** die elektronische Vorrichtung eine Speichereinheit, eine Verarbeitungseinheit, ein Programm, das in der Speichereinheit gespeichert und durch die Verarbeitungseinheit ausführbar ist, und eine Kabelbaugruppe zum Ausführen von Informationsaustausch zwischen der Verarbeitungseinheit und der Speichereinheit, wobei, wenn das Programm durch die Verarbeitungseinheit ausgeführt wird, das Verfahren zur Bildregistrierung und Templaterstellung nach einem der Ansprüche 1 bis 6 ausgeführt wird.

8. Speichermedium, wobei das Speichermedium ein durch einen Computer lesbares Speichermedium ist und als lesbarer Speicher für den Computer verwendet wird, **dadurch gekennzeichnet, dass** in dem Speichermedium ein Programm oder eine Vielzahl von Programmen gespeichert ist, wobei, wenn das Programm oder die Vielzahl von Programmen durch eine Verarbeitungseinheit oder eine Vielzahl von Verarbeitungseinheiten ausgeführt wird, das Verfahren zur Bildregistrierung und Templaterstellung nach einem der Ansprüche 1 bis 6 ausgeführt wird.

## Revendications

1. Procédé informatique d'enregistrement d'images et de construction de modèles comprenant :
obtenir des images de fluorescence originales à enregistrer dans une pluralité de cycles, les images de fluorescence originales de chaque cycle comprenant les images de fluorescence originales dans quatre canaux de fluorescence correspondant à quatre types de bases ;
effectuer un traitement d'une première image enregistrée sur les images de fluorescence originales de cycles différents dans un même canal de fluorescence afin d'obtenir les premières images de fluorescence ;
effectuer un traitement d'une deuxième image d'enregistrement sur les premières images de fluorescence du même canal de fluorescence afin d'obtenir une deuxième image de fluorescence ;
effectuer un traitement d'une correction d'aberration chromatique sur les deuxièmes images de fluorescence des quatre canaux de fluorescence dans un même cycle afin d'obtenir des images de fluorescence cibles ;
effectuer une extraction de coordonnées vers les points de fluorescence des images de fluorescence cibles afin d'obtenir des données sur les coordonnées des points de fluorescence ;
effectuer un traitement d'agrégation vers les points de fluorescence selon les coordonnées des points de fluorescence pour obtenir un modèle de séquençage ; et
effectuer un traitement d'extraction de luminosité d'une séquence d'ADN à acquérir selon le modèle de séquençage afin d'obtenir les valeurs correspondantes de luminosité cible des points lumineux cibles ;
dans lequel l'étape consistant à effectuer un traitement d'une correction d'aberration chromatique des deuxièmes images fluorescence des quatre canaux de fluorescence dans un même cycle afin d'obtenir des images de fluorescence cible, comprend :
effectuer un traitement par appariement aux points de fluorescence dans une région cible des deuxièmes images fluorescence des quatre canaux de fluorescence du même cycle selon un paramètre de deuxième rayon prédéterminé afin d'obtenir des paires de points de fluorescence deuxièmes ;
effectuer un traitement de correction aux deuxièmes paires de points de fluorescence pour obtenir les paires cibles ;
effectuer un calcul global de projection des paires de points de fluorescence cibles en utilisant un procédé des moindres carrés pour obtenir une matrice de transformation globale de projection ; et
effectuer une correction de transformation de perspective sur les deuxièmes images de fluorescence selon la matrice de transformation de projection globale afin d'obtenir les images de fluorescence cibles.

2. Procédé d'enregistrement d'images et de construction de modèles implémentée par ordinateur selon la revendication 1, **caractérisé en ce que** l'étape consistant à effectuer un traitement de l'enregistrement d'une première image aux images de fluorescence originales de différents cycles dans un même canal de fluorescence pour obtenir les premières images de fluorescence comprend :
effectuer une reconstruction binaire de l'image des images de fluorescence originales de différents cycles dans le même canal de fluorescence afin d'obtenir des images reconstruites au centroïde binaire, et effectuer une transformée de Fourier sur les images reconstruites au centroïde binaire pour obtenir les paramètres de traduction de l'image ; et
effectuer une transformation de traduction vers les images de fluorescence originales de différents cycles dans le même canal de fluorescence selon les paramètres de traduction de l'image afin d'obtenir les premières images de fluorescence.

3. Procédé d'enregistrement d'image et de construction de modèles implémenté par ordinateur selon la revendication 1, **caractérisé en ce que** l'étape consistant à effectuer un traitement de l'enregistrement d'une deuxième image sur les premières images de fluorescence du même canal de fluorescence pour obtenir des deuxièmes images de fluorescence comprend :
effectuer un traitement par appariement aux points de fluorescence des premières images de fluorescence selon un paramètre de premier rayon prédéterminé afin d'obtenir les premières paires de points de fluorescence ;
effectuer un calcul affine des premières paires de points de fluorescence en utilisant un procédé des moindres carrés pour obtenir une matrice affine ; et
effectuer une transformation affine des premières images de fluorescence du même canal de fluorescence en utilisant la matrice affine pour obtenir les deuxièmes images de fluorescence.

4. Procédé d'enregistrement d'image et de construction de modèles implémenté par ordinateur selon la revendication 1, **caractérisé en ce que** l'étape consistant à effectuer un traitement d'agrégation aux points de fluorescence selon les données des coordonnées de points de fluorescence pour obtenir un modèle de séquençage comprend :
calculer une valeur de distance entre chaque deux points de fluorescence selon les coordonnées des points de fluorescence ; et
effectuer un traitement d'agrégation des points de fluorescence selon la valeur de distance et un seuil de distance prédéterminé pour obtenir des points lumineux communs, puis la construction du modèle de séquençage selon les points lumineux communs.

5. Procédé d'enregistrement d'image et de construction de modèles implémenté par ordinateur selon la revendication 4, **caractérisé en ce que** l'étape consistant à effectuer un traitement de l'agrégation des points de fluorescence selon la valeur de distance et un seuil de distance prédéterminé pour obtenir des points lumineux communs, et la construction du modèle de séquençage selon les points lumineux communs comprend :
comparer la valeur de distance et un seuil de distance prédéterminé pour obtenir un résultat de comparaison ;
effectuer un traitement d'agrégation des points de fluorescence selon un algorithme de regroupement prédéterminé et le résultat de la comparaison pour obtenir les points lumineux communs ; et
construire un brin d'ADN unique selon les points lumineux communs et construire le modèle de séquençage selon le brin unique d'ADN.

6. Procédé d'enregistrement d'image et de construction de modèles implémenté par ordinateur selon l'une des revendications 1 à 5, **caractérisé en ce que** l'étape consistant à effectuer un traitement d'extraction de luminosité d'une séquence d'ADN à acquérir selon le modèle de séquençage pour obtenir les valeurs de luminosité cibles des points lumineux cibles correspondants comprend :
effectuer une extraction de luminosité de la séquence d'ADN à acquérir selon le modèle de séquençage, afin d'obtenir les points lumineux cibles ; et
extraire la valeur de luminosité d'un centroïde de chaque point lumineux cible par interpolation bilinéaire pour obtenir la valeur de luminosité cible.

7. Dispositif électronique, **caractérisé en ce que** le dispositif électronique comprend une unité de stockage, une unité de traitement, un programme stocké dans l'unité de stockage et exécutable par l'unité de traitement, ainsi qu'un assemblage de câbles pour effectuer la communication d'information entre l'unité de traitement et l'unité de stockage, dans lequel, lorsque le programme est exécuté par l'unité de traitement, le procédé d'enregistrement de l'image et de construction du modèle selon l'une des revendications 1 à 6 est effectué.

8. Support de stockage, ledit support de stockage étant un support lisible par un ordinateur et utilisé comme mémoire lisible pour l'ordinateur, **caractérisé en ce que** le support stocke un programme ou une pluralité de programmes, dans lequel lorsque le programme ou la pluralité de programmes est exécuté par une unité de traitement ou une pluralité d'unités de traitement, le procédé d'enregistrement de l'image et de construction des modèles de chacune des revendications 1 à 6 est effectué.
